(19) Europäisches Patentamt
European Patent Office
Office européen des brevets

(11) **EP 3 850 319 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **18810893.0**

(22) Anmeldetag: **09.11.2018**

(51) Internationale Patentklassifikation (IPC):
*G01K 1/16* *(2006.01)*   *G01K 1/143* *(2021.01)*
*G01K 7/42* *(2006.01)*

(52) Gemeinsame Patentklassifikation (CPC):
**G01K 1/143; G01K 1/16; G01K 7/427**

(86) Internationale Anmeldenummer:
**PCT/EP2018/080791**

(87) Internationale Veröffentlichungsnummer:
**WO 2020/094240 (14.05.2020 Gazette 2020/20)**

(54) **ANORDNUNG ZUM ERMITTELN DER TEMPERATUR EINER OBERFLÄCHE**

ASSEMBLY FOR DETERMINING THE TEMPERATURE OF A SURFACE

SYSTÈME DE DÉTERMINATION DE LA TEMPÉRATURE D'UNE SURFACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.07.2021   Patentblatt 2021/29**

(73) Patentinhaber: **Siemens Energy Global GmbH & Co. KG**
**81739 München (DE)**

(72) Erfinder:
• **ARMSCHAT, Christoph**
**91058 Erlangen (DE)**
• **WEIGT, Uwe**
**91056 Erlangen (DE)**

(56) Entgegenhaltungen:
EP-A1- 2 329 240       EP-B1- 2 329 240
DE-A1- 19 917 372     DE-A1-102015 201 155
GB-A- 2 266 771

**Beschreibung**

Die Erfindung betrifft eine Anordnung zum Ermitteln der Temperatur einer Oberfläche sowie ein Verfahren zum Ermitteln der Temperatur einer Oberfläche.

Im industriellen Umfeld müssen oftmals Temperaturen von Oberflächen ermittelt werden, zum Beispiel Temperaturen von Oberflächen von vergleichsweise heißen Bauteilen. Die zu ermittelnden Temperaturen können beispielsweise 80°C, 150°C, 200°C oder auch mehr betragen. Dabei besteht die Gefahr, dass eine verwendete Sensoreinheit durch die hohen Temperaturen beeinträchtigt oder sogar beschädigt wird. Dieses Problem tritt besonders deutlich auf, wenn die Sensoreinheit außer einem Temperatursensor noch weitere elektrotechnische oder elektronische Einheiten aufweist, wie beispielsweise einen elektrischen Energiespeicher oder eine drahtlose Datenübertragungseinheit. Dies ist beispielsweise bei Hochspannungsanlagen denkbar, bei denen aufgrund der hohen Spannungen, Ströme und/oder umgesetzten elektrischen Leistungen hohe Temperaturen auftreten können. Da aufgrund der Hochspannung oftmals keine leitungsgebundene Datenübertragung gewünscht wird, ist es denkbar, bei derartigen Temperaturmessungen drahtlose Datenübertragungseinheiten sowie in der Sensoreinheit installierte elektrische Energiespeicher einzusetzen. Solche elektrischen Energiespeicher (beispielsweise chemische Energiespeicher wie Batterien oder Akkumulatoren) weisen jedoch bei hohen Temperaturen eine stark verkürzte Lebensdauer auf. Drahtlose Datenübertragungseinheiten sind (aufgrund der in ihnen enthaltenen elektronischen Bauteile) empfindlich gegenüber hohen Temperaturen.

Aus der Offenlegungsschrift GB 2 266 771 A ist ein Thermometer bekannt, das eine thermisch leitfähige Barriere aufweist. Diese thermisch leitfähige Barriere ist mit einem Heiz- oder Kühlelement versehen. An der Barriere ist ein Temperatursensor angeordnet, an einer Spitze des Thermometers ist ein zweiter Temperatursensor angeordnet.

Die Schrift EP 2 329 240 A1 offenbart ein Messgerät zur Ermittlung der Temperatur des tierischen oder menschlichen Körpers. Dieses Messgerät weist zwei Temperatursensoren auf, die einen unterschiedlichen Abstand von der Oberfläche des Körpers haben. Wenn thermische Charakteristiken des Körpers bekannt sind, kann damit die Kerntemperatur des Körpers ermittelt werden.

Die Offenlegungsschrift DE 199 17 372 A1 offenbart ein Messgerät zum Erfassen der Temperatur einer Oberfläche, das mit einer Tastspitze zum Ansetzen an die Oberfläche und einem Temperatursensor zum Erfassen der Temperatur der Tastspitze versehen ist. Eine Auswerteeinheit ist so ausgebildet, dass sie die Temperatur der Oberfläche aus dem Zeitverlauf der an der Tastspitze erfassten Temperatur mittels eines mathematischen Modells ermittelt.

Der Erfindung liegt die Aufgabe zugrunde, eine Anordnung und ein Verfahren anzugeben, mit denen der Anwendungsbereich einer einen Temperatursensor aufweisenden Sensoreinheit vergrößert werden kann.

Diese Aufgabe wird erfindungsgemäß gelöst durch eine Anordnung und durch ein Verfahren nach den unabhängigen Patentansprüchen. Vorteilhafte Ausgestaltungen der Anordnung und des Verfahrens sind in den abhängigen Patentansprüchen angegeben.

Offenbart wird eine Anordnung zum Ermitteln der Temperatur einer Oberfläche, mit

- einer ersten Sensoreinheit, die einen ersten Temperatursensor aufweist,
- einem ersten wärmeleitenden Bauelement, das dazu ausgestaltet ist, die erste

Sensoreinheit (thermisch) mit der Oberfläche zu verbinden,

- einem zweiten wärmeleitenden Bauelement, das dazu ausgestaltet ist, die erste Sensoreinheit (thermisch) mit einem von der Oberfläche beabstandeten Referenzpunkt (zum Beispiel in der Umgebung eines die Oberfläche aufweisenden Bauteils) zu verbinden (wodurch an der ersten Sensoreinheit eine Temperatur auftritt, die zwischen der Temperatur der Oberfläche und der Temperatur des Referenzpunktes liegt). Dadurch ist es möglich, mit der ersten Sensoreinheit (genauer gesagt mit dem ersten Temperatursensor der ersten Sensoreinheit) eine größere Temperatur zu messen als diejenige, für die die erste Sensoreinheit ausgebildet ist und mit der die erste Sensoreinheit beaufschlagt werden kann. Je nach Ausgestaltung des ersten wärmeleitenden Bauelements und des zweiten wärmeleitenden Bauelements können erheblich höhere Temperaturen gemessen werden als die Maximaltemperatur, die die erste Sensoreinheit zu messen imstande ist. Die Temperatur des Referenzpunktes kann zum Beispiel die Temperatur eines Kühlmediums des Bauteils sein, insbesondere die Temperatur von das Bauteil umströmender Kühlluft.

Die Anordnung kann so ausgestaltet sein, dass das erste wärmeleitende Bauelement und das zweite wärmeleitende Bauelement einen Wärmeteiler bilden, wobei das erste wärmeleitende Bauelement einen ersten Wärmewiderstand aufweist und das zweite wärmeleitende Bauelement einen zweiten Wärmewiderstand aufweist.

Dadurch ist die an der ersten Sensoreinheit auftretende Temperatur geringer als die Temperatur der Oberfläche.

Das erste wärmeleitende Bauelement und das zweite wärmeleitende Bauelement sind so ausgestaltet, dass die sich stationär einstellende Temperatur der ersten Sensoreinheit in Grad Celsius zwischen 20% und 70% der Temperatur der Oberfläche, insbesondere zwischen 20% und 40% der Temperatur der Oberfläche, beträgt. Dadurch wird der Temperatur-Ermittlungsbereich der Anordnung im Vergleich zum Temperatur-Ermittlungsbereich der ersten Sensoreinheit erheblich vergrößert.

Die Anordnung kann auch so ausgestaltet sein, dass das erste wärmeleitende Bauelement an einer Seite der ersten Sensoreinheit angeordnet ist und das zweite wärmeleitende Bauelement an der gegenüberliegenden Seite der ersten Sensoreinheit angeordnet ist. Dadurch erfolgt ein vergleichsweise ungehinderter Wärmefluss von der Oberfläche über das erste wärmeleitende Bauelement, die erste Sensoreinheit und das zweite wärmeleitende Bauelement zum Referenzpunkt.

Die Anordnung kann so ausgestaltet sein, dass das erste wärmeleitende Bauelement an einer der Oberfläche zugewandten Seite der ersten Sensoreinheit angeordnet ist und das zweite wärmeleitende Bauelement an einer der Oberfläche abgewandten Seite der ersten Sensoreinheit angeordnet ist. Auch hierdurch wird ein vergleichsweise ungehinderter Wärmefluss ermöglicht.

Die Anordnung kann auch so ausgestaltet sein, dass das erste wärmeleitende Bauelement und/oder das zweite wärmeleitende Bauelement jeweils eine T-förmige Querschnittsfläche aufweisen. Mittels des Querbalkens des Ts kann das erste wärmeleitende Bauelement und/oder das zweite wärmeleitende Bauelement an die Oberfläche, an die erste Sensoreinheit oder an den Referenzpunkt thermisch angekoppelt werden. Mit anderen Worten gesagt, ermöglicht der Querbalken des Ts einen guten Wärmeübergang in das erste bzw. zweite wärmeleitende Bauelement hinein oder aus diesem heraus.

Die Anordnung kann auch so ausgestaltet sein, dass das erste wärmeleitende Bauelement und/oder das zweite wärmeleitende Bauelement jeweils eine Doppel-T-förmige Querschnittsfläche aufweisen. Hierbei ermöglichen die beiden Querbalken des ersten bzw. zweiten wärmeleitenden Bauelements einen guten Wärmeübergang in das erste oder zweite wärmeleitende Bauelement hinein bzw. aus diesem heraus.

Die Anordnung kann so ausgestaltet sein, dass das erste wärmeleitende Bauelement eine Scheibe ist und/oder das zweite wärmeleitende Bauelement eine Kappe ist. Durch Anordnung der ersten Sensoreinheit zwischen der Scheibe und der Kappe ergibt sich ein sehr kompakter Aufbau der Anordnung.

Die Anordnung kann auch so ausgestaltet sein, dass das zweite wärmeleitende Bauelement Kühlrippen aufweist. Dies ermöglicht eine gute Wärmeabgabe von dem zweiten wärmeleitenden Bauelement zum Referenzpunkt (also beispielsweise zur Umgebung des die Oberfläche aufweisenden Bauteils) hin. Dadurch wird ein stetiger Wärmefluss durch den Wärmeteiler hindurch sichergestellt.

Die Anordnung kann so ausgestaltet sein, dass die erste Sensoreinheit, das erste wärmeleitende Bauelement und/oder das zweite wärmeleitende Bauelement gegenüber einem sie umgebenden Fluid, insbesondere gegenüber der sie umgebenden Luft, thermisch isoliert sind. Dadurch wird eine mögliche Verfälschung der Temperaturermittlung durch ein Fluid, welches unterschiedlich schnell an verschiedenen Stellen der Anordnung vorbeiströmt (zum Beispiel unterschiedlich schnelle Luftströmungen), verringert.

Die Anordnung kann auch ein Abschirmelement zum Abschirmen von Wärmestrahlen aufweisen, das beabstandet von der ersten Sensoreinheit, dem ersten wärmeleitenden Bauelement und/oder dem zweiten wärmeleitenden Bauelement angeordnet ist. Dieses Abschirmelement vermindert den verfälschenden Einfluss von Wärmestrahlen, die (zum Beispiel durch das umgebende Fluid, insbesondere Luft) zu der Anordnung gelangen.

Die Anordnung kann eine zweite Sensoreinheit zum Ermitteln der Temperatur des Referenzpunktes aufweisen, wobei die zweite Sensoreinheit einen zweiten Temperatursensor aufweist, und die zweite Sensoreinheit an einer der ersten Sensoreinheit abgewandten Seite des zweiten wärmeleitenden Bauelements angeordnet ist. Dadurch kann die Temperatur des Referenzpunktes ermittelt werden und die Anordnung kann besonders kompakt aufgebaut werden.

Die Anordnung kann auch eine zweite Sensoreinheit zum Ermitteln der Temperatur des Referenzpunktes aufweisen, wobei die zweite Sensoreinheit mittels eines Abstandshalters an der Oberfläche befestigbar ist. Durch den Abstandshalter wird ein Abstand zwischen Oberfläche und zweiter Sensoreinheit sichergestellt. Dadurch kann ein verfälschender Einfluss der (heißen) Oberfläche auf die Ermittlung der Temperatur des Referenzpunktes geringgehalten werden kann.

Die Anordnung kann auch so ausgestaltet sein, dass das erste wärmeleitende Bauelement einen ersten Wärmewiderstand aufweist, und der Wärmewiderstand des Abstandshalters größer ist, insbesondere mindestens 5 Mal größer ist, als der erste Wärmewiderstand. Dadurch wird erreicht, dass der verfälschende Einfluss der Oberfläche auf die zweite Sensoreinheit relativ gering ist.

Die Anordnung kann auch so ausgestaltet sein, dass die Oberfläche die Oberfläche eines Bauteils, insbesondere die Oberfläche eines Bauteils einer Hochspannungsanlage, ist. Damit kann vorteilhafterweise insbesondere die Temperatur der Oberfläche eines Bauteils der Hochspannungsanlage ermittelt werden.

Die Anordnung kann auch so ausgestaltet sein, dass die erste Sensoreinheit (zusätzlich zu dem ersten Temperatursensor) einen elektrischen Energiespeicher und/oder eine drahtlose Datenübertragungseinheit aufweist. Eine solche Sensoreinheit kann beispielsweise eine Funk-Sensoreinheit sein, die einen Energiespeicher und/oder eine Funk-Datenübertragungseinheit aufweist. Mittels der drahtlosen Datenübertragungseinheit lassen sich die Messwerte (oder aus den Messwerten abgeleitete Werte) einfach von der ersten Sensoreinheit zu einem geeigneten Empfänger übertragen. Dies ist insbesondere bei einer Hochspannungsanlage von Vorteil.

Offenbart wird weiterhin ein Verfahren zum Ermitteln der Temperatur einer Oberfläche mittels einer ersten Sensoreinheit, die einen ersten Temperatursensor aufweist, einem ersten wärmeleitenden Bauelement, das die ersten Sensoreinheit (thermisch) mit der Oberfläche verbindet, und einem zweiten wärmeleitenden Bauelement, das die erste Sensoreinheit (thermisch) mit einem von der Oberfläche beabstandeten Referenzpunkt (zum Beispiel in der Umgebung eines die Oberfläche aufweisenden Bauteils) verbindet, wobei das erste wärmeleitende Bauelement und das zweite wärmeleitende Bauelement so ausgestaltet sind, dass die sich stationär einstellende Temperatur der ersten Sensoreinheit in Grad Celsius zwischen 20% und 70% der Temperatur der Oberfläche, insbesondere zwischen 20% und 40% der Temperatur der Oberfläche, beträgt, wenn die Temperatur der Oberfläche größer ist als die Temperatur des Referenzpunktes, wobei bei dem Verfahren

- mittels des ersten Temperatursensors eine erste Temperatur gemessen wird, die sich am Ort des ersten Temperatursensors einstellt, wobei die erste Temperatur zwischen der Temperatur der Oberfläche und der Temperatur des Referenzpunktes liegt, und
- aus der gemessenen ersten Temperatur und der Temperatur des Referenzpunktes die Temperatur der Oberfläche ermittelt wird. Beispielsweise kann die Temperatur der Oberfläche aus der gemessenen ersten Temperatur und der Temperatur des Referenzpunktes rechnerisch ermittelt werden.

Das Verfahren kann so ablaufen, dass aus der gemessenen ersten Temperatur und der Temperatur des Referenzpunktes die Temperatur der Oberfläche ermittelt wird mittels vorbekannter thermischer Eigenschaften des ersten wärmeleitenden Bauelements und des zweiten wärmeleitenden Bauelements. Bei den vorbekannten thermischen Eigenschaften kann es sich beispielsweise um den Wärmewiderstand des ersten wärmeleitenden Bauelements und dem Wärmewiderstand des zweiten wärmeleitenden Bauelements handeln.

Das Verfahren kann so ablaufen, dass aus der gemessenen ersten Temperatur und der Temperatur des Referenzpunktes die Temperatur der Oberfläche ermittelt wird mittels einer vorbekannten Abhängigkeit der Temperatur der Oberfläche von der gemessenen ersten Temperatur bei der jeweiligen Temperatur des Referenzpunktes. Die vorbekannte Abhängigkeit kann beispielsweise in einem Laborversuch vorab ermittelt worden sein.

Das Verfahren kann auch so ablaufen, dass die vorbekannte Abhängigkeit als zusammengehörende Werte in einer Tabelle oder in einem elektronischen Speicher gespeichert sind. Dabei ist von Vorteil, dass die Temperatur der Oberfläche dann einfach aus der Tabelle bzw. aus dem Speicher ausgelesen werden kann; aufwändige Rechenoperationen müssen dafür nicht durchgeführt werden.

Das Verfahren kann auch so ablaufen, dass mittels eines zweiten Temperatursensors die Temperatur des Referenzpunktes gemessen wird. Dadurch kann die Temperatur des Referenzpunktes stets aktuell ermittelt werden.

Die beschriebene Anordnung und das beschriebene Verfahren weisen gleiche bzw. gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente.

Dazu ist in

Figur 1    ein erstes Ausführungsbeispiel einer Anordnung, welche an der Oberfläche eines Hochspannungs-Bauteils angeordnet ist, in

Figur 2    ein zweites Ausführungsbeispiel einer Anordnung mit einem ersten wärmeleitenden Bauelement und einem zweiten wärmeleitenden Bauelement, welche jeweils eine doppel-T-förmige Querschnittsfläche aufweisen, in

Figur 3    ein Ausführungsbeispiel einer zweiten Sensoreinheit, die mittels eines Abstandshalters auf einer Oberfläche montiert ist, in einer teilweise geschnitten dargestellten Seitenansicht, in

Figur 4    die zweite Sensoreinheit der Figur 3 in einer Ansicht von oben, in

Figur 5    die zweite Sensoreinheit der Figur 3 in einer teilweise geschnitten dargestellten Seitenansicht von einer anderen Seite, in

Figur 6    ein Ausführungsbeispiel einer Anordnung mit einem Abschirmelement, in

Figur 7    ein Ausführungsbeispiel eines thermischen Modells der Anordnung, und in

Figur 8    ein Ausführungsbeispiel einer Sensoreinheit dargestellt.

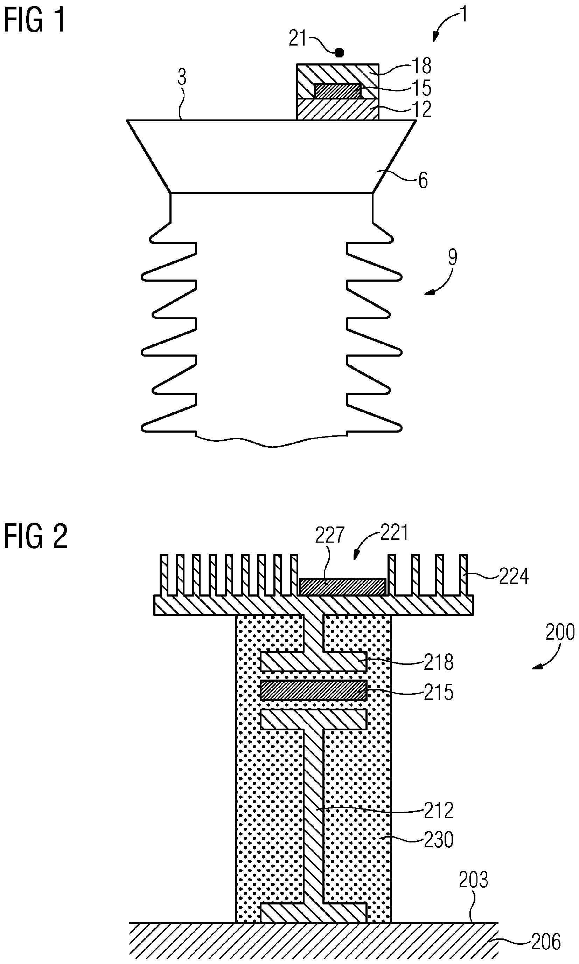

In Figur 1 ist in einer teilweisen Schnittdarstellung ein Ausführungsbeispiel einer Anordnung 1 zum Ermitteln einer Temperatur einer Oberfläche 3 eines Bauteils 6 dargestellt. Insbesondere kann es sich bei dem Bauteil 6 um ein Bauteil einer Hochspannungsanlage (Hochspannungs-Bauteil 6) handeln. Im Ausführungsbeispiel handelt es sich bei dem Bauteil um einen Flansch 6 (genauer gesagt um einen Kopfflansch 6) eines Überspannungsableiters 9, wie er insbesondere in der Hochspannungstechnik eingesetzt wird. Jedoch sind der Flansch 6 und der Überspannungsableiter 9 nur beispielhaft zu verstehen, in einem anderen Ausführungsbeispiel kann mittels der Anordnung 1 selbstverständlich auch die Temperatur einer anderen Oberfläche ermittelt werden.

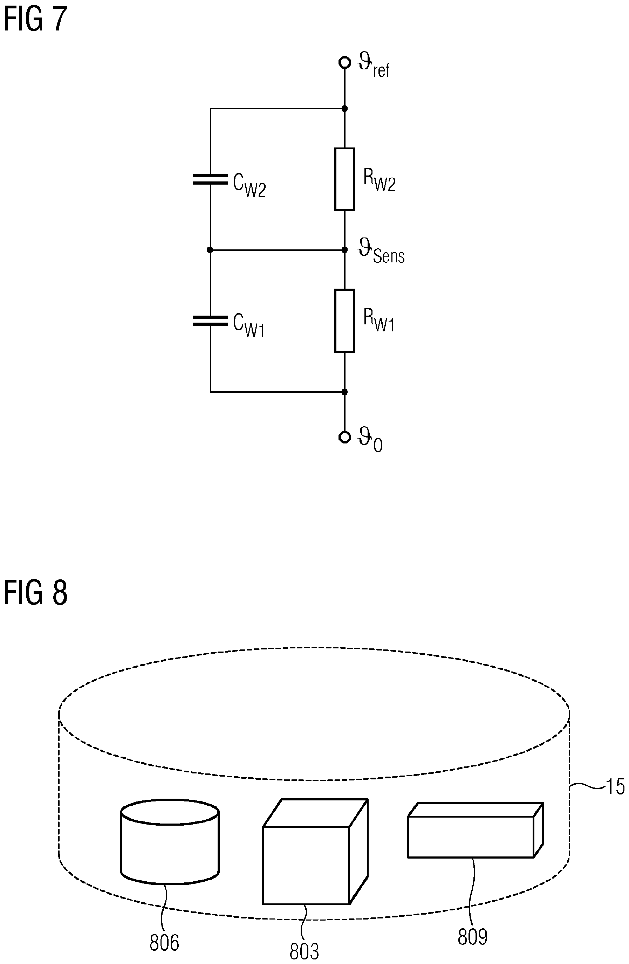

Die Anordnung 1 weist ein erstes wärmeleitendes Bauelement 12, eine erste Sensoreinheit 15 und ein zweites wärmeleitendes Bauelement 18 auf. Die erste Sensoreinheit 15 weist einen ersten Temperatursensor 803 (vgl. Figur 8) auf, mit dem die Temperatur der ersten Sensoreinheit 15 gemessen werden kann. Weiterhin weist die erste Sensoreinheit 15 einen elektrischen Energiespeicher 806 auf, um die erste Sensoreinheit 15 zumindest temporär mit elektrischer Energie zu versorgen. Weiterhin weist die erste Sensoreinheit 15 eine drahtlose Datenübertragungseinheit 809 (beispielsweise eine Funk-Datenübertragungseinheit) auf, um Messwerte des ersten Temperatursensors 803 (oder von diesen Messwerten abgeleitete Werte) drahtlos zu einem Empfänger zu übermitteln.

Das erste wärmeleitende Bauelement 12 verbindet die Oberfläche 3 des Bauteils 6 thermisch mit der ersten Sensoreinheit 15. Im Ausführungsbeispiel ist das erste wärmeleitende Bauelement 12 als eine Scheibe 12 ausgestaltet, welche zwischen der Oberfläche 3 und der ersten Sensoreinheit 15 angeordnet ist. Das zweite wärmeleitende Bauelement 18 ist im Ausführungsbeispiel als eine Kappe 18 ausgestaltet. Diese Kappe 18 deckt die erste Sensoreinheit 15 ab. Benachbart zu dem zweiten wärmeleitenden Bauelement 18 befindet sich ein Referenzpunkt 21, dessen Temperatur bekannt ist. Dieser Referenzpunkt 21 befindet sich auf der von der Oberfläche 3 abgewandten Seite der Anordnung 1. Mit anderen Worten gesagt, befindet sich auf der einen Seite der Anordnung 1 die Oberfläche 3 mit der zu ermittelnden Temperatur und auf der gegenüberliegenden Seite der Anordnung 1 befindet sich der Referenzpunkt 21 mit der bekannten Temperatur. Die Temperatur des Referenzpunkts 21 (Referenztemperatur $\vartheta_{Ref}$) kann zum Beispiel mittels einer weiteren Sensoreinheit ermittelt werden. Die Temperatur des Referenzpunktes 21 kann beispielsweise die Lufttemperatur in der Umgebung des Bauteils 6 sein, insbesondere die Lufttemperatur in der Umgebung des zweiten wärmeleitenden Bauelements 18.

Das zweite wärmeleitende Bauelement 18 verbindet die erste Sensoreinheit 15 also mit dem Referenzpunkt 21. Das erste wärmeleitende Bauelement 12 und das zweite wärmeleitende Bauelement 18 bilden einen Wärmeteiler. Es strömt Wärme (Wärmeströmung) von der Oberfläche 3 durch das erste wärmeleitende Bauelement 12 und das zweite wärmeleitende Bauelement 18 zu dem Referenzpunkt 21. Das erste wärmeleitende Bauelement 12 weist einen ersten Wärmewiderstand $R_{w1}$ auf; das zweite wärmeleitende Bauelement 18 weist einen zweiten Wärmewiderstand $R_{w2}$ auf. An der ersten Sensoreinheit 15 stellt sich (im stationären Zustand) eine Temperatur ein, die zwischen der Temperatur der Oberfläche 3 und der Temperatur des Referenzpunktes 21 liegt. Diese Temperatur kann mittels des ersten Temperatursensors der ersten Sensoreinheit 15 gemessen werden. Aus der gemessenen Temperatur kann die Temperatur der Oberfläche 3 ermittelt werden. Dabei gilt folgender Zusammenhang:

$$\vartheta_O = k \ (\vartheta_{sens} - \vartheta_{Ref}).$$

Dabei ist $\vartheta_O$ die Temperatur der Oberfläche 3, $\vartheta_{sens}$ die von dem ersten Temperatursensor der ersten Sensoreinheit gemessene Temperatur, $\vartheta_{Ref}$ die Temperatur des Referenzpunktes und k ein Umrechnungsfaktor (bzw. eine Umrechnungsfunktion, falls bessere Genauigkeit über einen größeren Messbereich erforderlich ist).

Beim Ausführungsbeispiel können die folgenden Werte vorliegen: $\vartheta_O = 110°C$, $\vartheta_{sens} = 70°C$, $\vartheta_{Ref} = 38°C$. Bei diesem Ausführungsbeispiel tritt über dem ersten wärmeleitenden Bauelement 12 eine Temperaturdifferenz von 40K auf ($\Delta t1 = 40K$); über dem zweiten wärmeleitenden Bauelement 18 tritt eine Temperaturdifferenz von 32K auf ($\Delta t2 = 32K$). Es ist also ersichtlich, dass in der Anordnung 1 ein Wärmeteiler ausgebildet ist. An der ersten Sensoreinheit 15 tritt eine Temperatur $\vartheta_{sens}$ auf, die zwischen der Temperatur der Oberfläche $\vartheta_O$ und der Temperatur des Referenzpunktes $\vartheta_{Ref}$ liegt.

Dadurch kann die Temperatur der Oberfläche $\vartheta_O = 110°C$ beispielsweise auch dann ermittelt werden, wenn der Messbereich der ersten Sensoreinheit 15 bei 80°C endet. Durch die wärmeteilende Wirkung der Anordnung 1 tritt nämlich an der ersten Sensoreinheit 15 nur die Temperatur $\vartheta_{sens} = 70°C$ auf, welche noch innerhalb des zulässigen Messbereiches der ersten Sensoreinheit 15 liegt.

In Figur 2 ist in einer teilweisen Schnittdarstellung ein weiteres Ausführungsbeispiel einer Anordnung 200 zum Ermitteln der Temperatur einer Oberfläche 203 eines Bauteils 206 dargestellt. Die Anordnung 200 weist ein erstes wärmeleitendes Bauelement 212, eine erste Sensoreinheit 215 und ein zweites wärmeleitendes Bauelement 218 auf. Das erste wärmeleitende Bauelement 212 verbindet die Oberfläche 203 des Bauteils 206 thermisch mit der ersten Sensoreinheit 215. Das zweite wärmeleitende Bauelement 218 verbindet die erste Sensoreinheit 215 thermisch mit einem von der Oberfläche 203 beabstandeten Referenzpunkt 221. Das erste wärmeleitende Bauelement 212 weist einen ersten Wärmewiderstand $R_{W1}$ auf; das zweite wärmeleitende Bauelement 218 weist einen zweiten Wärmewiderstand $R_{W2}$ auf. An der ersten Sensoreinheit 215 stellt sich im stationären Fall eine Temperatur ein, die zwischen der Temperatur der Oberfläche 203 und der Temperatur des Referenzpunktes 221 liegt. Beispielsweise kann die Temperatur $\vartheta_o$ der Oberfläche 180°C betragen (Oberflächentemperatur $\vartheta_o$ = 180°C). Die Temperatur des Referenzpunktes 221 kann im Beispiel 49°C betragen (Referenztemperatur $\vartheta_{Ref}$ = 49°C). Daraufhin stellt sich an der ersten Sensoreinheit 215 eine Temperatur von 70°C ein (Messtemperatur $\vartheta_{sens}$ = 70°C). Diese Temperatur $\vartheta_{sens}$ wird mittels der ersten Sensoreinheit 215 gemessen. Aus dieser Temperatur $\vartheta_{sens}$ sowie der bekannten Temperatur $\vartheta_{Ref}$ des Referenzpunktes 221 sowie den bekannten thermischen Eigenschaften (zum Beispiel den Wärmewiderständen) des ersten wärmeleitenden Bauelements 212 und des zweiten wärmeleitenden Bauelements 218 kann dann die Temperatur $\vartheta_o$ der Oberfläche 203 ermittelt werden.

Bei diesem Beispiel beträgt die sich stationär einstellende Temperatur $\vartheta_{sens}$ der ersten Sensoreinheit 215 ca. 39% der Temperatur $\vartheta_o$ der Oberfläche 203. Im Allgemeinen können das erste wärmeleitende Bauelement und das zweite wärmeleitende Bauelement so ausgestaltet sein, dass die sich stationär einstellende Temperatur $\vartheta_{sens}$ der ersten Sensoreinheit in Grad Celsius zwischen 20% und 70% der Temperatur der Oberfläche, insbesondere zwischen 20% und 40% der Temperatur der Oberfläche, beträgt.

Das erste wärmeleitende Bauelement 212 weist im Ausführungsbeispiel eine doppel-T-förmige Querschnittsfläche auf. Dabei liegt ein erster Querbalken des ersten wärmeleitenden Bauelements 212 an der Oberfläche 203 an und sorgt für einen guten thermischen Übergang zwischen der Oberfläche 203 und dem ersten wärmeleitenden Bauelement 212. Ein zweiter Querbalken des ersten wärmeleitenden Bauelements 212 liegt an der ersten Sensoreinheit 215 an und sorgt für einen guten Wärmeübergang zwischen dem ersten wärmeleitenden Bauelement 212 und der ersten Sensoreinheit 215. Das zweite wärmeleitende Bauelement 218 weist ebenfalls eine doppel-T-förmige Querschnittsfläche auf. Ein erster Querbalken des zweiten wärmeleitenden Bauelements 218 liegt dabei an der ersten Sensoreinheit 215 an und sorgt für einen guten Wärmeübergang zwischen der ersten Sensoreinheit 215 und dem zweiten wärmeleitenden Bauelement 218. Ein zweiter Querbalken des zweiten wärmeleitenden Bauelements 218 ist mit Kühlrippen 224 versehen. Diese Kühlrippen 224 ermöglichen eine gute Wärmeabgabe von dem zweiten wärmeleitenden Bauelement 218 in die Umgebung, zum Beispiel in die das zweite wärmeleitende Bauelement 218 umgebende Luft. Das erste wärmeleitende Bauelement 212 weist also im Beispiel eine hantelförmige Gestalt auf. Dies trifft grundsätzlich auch auf das zweite wärmeleitende Bauelement 218 zu, wobei hier die "Gewichtsscheiben" der "Hantel" unterschiedliche Größen aufweisen.

Der Referenzpunkt 221 kann auf der der ersten Sensoreinheit abgewandten Seite des zweiten wärmeleitenden Bauelements 218 liegen, insbesondere benachbart zu den Kühlrippen 224 des zweiten wärmeleitenden Bauelements 218. Der Referenzpunkt 221 kann an der Oberfläche des zweiten wärmeleitenden Bauelements 218 anliegen, so dass dann die Temperatur des Referenzpunktes 221 der Temperatur der Oberfläche des zweiten wärmeleitenden Bauelements 218 auf der der ersten Sensoreinheit abgewandten Seite entspricht. Im Ausführungsbeispiel ist dieser Fall darstellt. Dabei ist auf der Oberfläche des zweiten wärmeleitenden Bauelements 218 auf der von der ersten Sensoreinheit 215 abgewandten Seite eine zweite Sensoreinheit 227 angeordnet. Die zweite Sensoreinheit 227 ermittelt die Temperatur des Referenzpunktes 221, welche hier der Temperatur der Oberfläche des zweiten wärmeleitenden Bauelements 218 entspricht. Hierbei handelt es sich um die niedrigste Temperatur der Oberfläche des zweiten wärmeleitenden Bauelements 218. Die zweite Sensoreinheit 227 kann gleichartig zu der ersten Sensoreinheit 215 aufgebaut sein. Insbesondere weist die zweite Sensoreinheit 227 einen zweiten Temperatursensor zum Messen der Temperatur auf.

Die Messung der Referenztemperatur an den Kühlrippen des zweiten wärmeleitenden Bauelements (wie in Figur 2 dargestellt) kann insbesondere dann vorteilhaft sein, wenn die das Bauteil umgebende Luft sich nicht bewegt und daher größere Temperaturunterschiede in der Umgebungsluft auftreten können. In diesem Fall kann eine von dem zweiten wärmeleitenden Bauelement 218 beabstandete Messung der Referenztemperatur zu ungenau sein.

Abweichend von der Darstellung in Figur 2 kann die zweite Sensoreinheit jedoch auch beabstandet von dem zweiten wärmeleitenden Bauelement 218 angeordnet sein. Eine derartig angeordnete zweite Sensoreinheit kann beispielsweise die Temperatur der Luft in der Umgebung des zweiten wärmeleitenden Bauelements 218 bzw. die Temperatur der Luft in der Umgebung der Kühlrippen 224 messen. Auch diese Temperatur kann als Referenztemperatur verwendet werden.

Der Wärmeteiler kann vorteilhafterweise so ausgebildet sein, dass die Wärmeleitpfade eine vergleichsweise kleine Wärmekapazität aufweisen. Dadurch wird verhindert, dass der Wärmeteiler zu träge auf Temperaturveränderungen reagiert (Optimierung der Verzögerungs-Zeitkonstante der Temperaturmessung). Dies wird beispielsweise durch das erste wärmeleitende Bauelement 212 und durch das zweite wärmeleitende Bauelement 218 mit der T-förmigen bzw. Doppel-T-förmigen Querschnittsfläche erreicht.

Auch um den Einfluss verschiedener Strömungsgeschwindigkeiten des Kühlmediums (beispielsweise der kühlenden Umgebungsluft) gering zu halten, werden die Wärmeleitpfade der Anordnung so ausgeführt, dass diese eine vergleichsweise kleine Wärmekapazität aufweisen. Darüber hinaus können die Wärmeleitpfade mit einer Wärmeisolierung 230 (thermische Isolierung) versehen sein, z.B. mit einer Festschaum-Ummantelung 230. Im Unterschied dazu ist der Kontaktbereich des zweiten wärmeleitenden Bauelements zur Umgebung mit einem sehr niedrigen thermischen Übergangswiderstand ausgeführt. Dies wird beispielsweise durch die Kühlrippen 224 erreicht. Die Temperatur des zweiten wärmeleitenden Bauelements an den Kühlrippen ist damit ungefähr gleich der Temperatur des Referenzpunktes 221 (zum Beispiel der Umgebungstemperatur).

In einem anderen Ausführungsbeispiel kann das erste wärmeleitende Bauelement und/oder das zweite wärmeleitende Bauelement auch jeweils eine T-förmige Querschnittsfläche aufweisen. Diese Bauelemente würden dann beispielsweise nicht den der ersten Sensoreinheit zugewandten Querbalken aufweisen, sondern man könnte diesen Querbalken auch weglassen. Im Zusammenhang mit der Schnittdarstellung der Fig. 2 wurde vorstehend von Querbalken gesprochen; diese Querbalken korrespondieren in der tatsächlichen dreidimensionalen Darstellung der wärmeleitenden Bauelemente 212 und 218 mit Flächen, welche beispielsweise an der ersten Sensoreinheit 215 oder an der Oberfläche 203 anliegen.

Bei den bisher beschriebenen Ausführungsbeispielen wurde die Temperatur einer Oberfläche eines Bauteils ermittelt. Bei anderen Ausführungsbeispielen kann aber auch die Temperatur einer anderen Oberfläche ermittelt werden, beispielsweise die Temperatur einer Oberfläche eines Fluids, also insbesondere die Temperatur einer Oberfläche einer Flüssigkeit oder eines Gases.

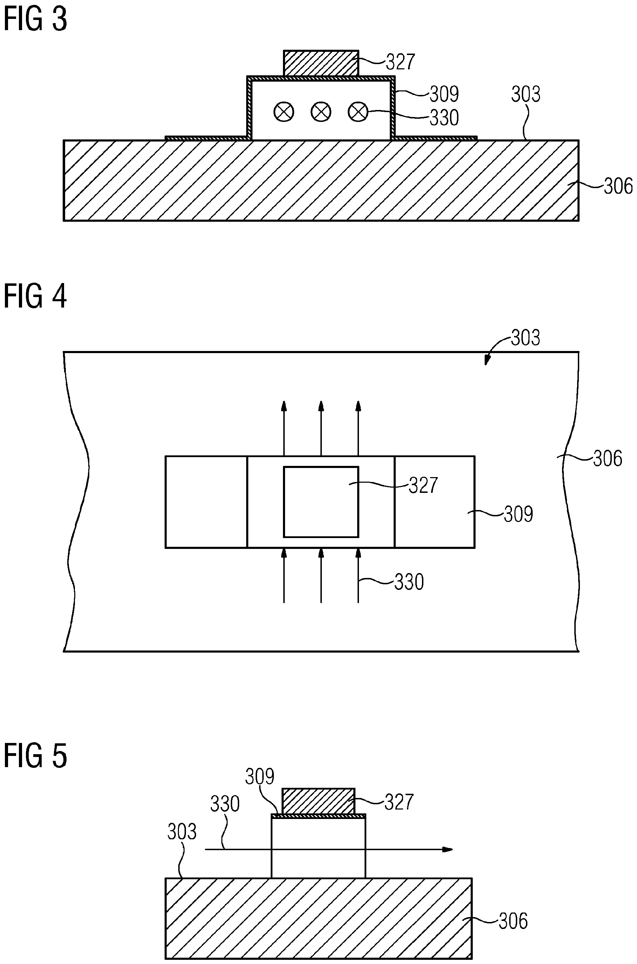

In den Figuren 3 - 5 ist ein weiteres Ausführungsbeispiel einer zweiten Sensoreinheit 327 zum Messen der Referenztemperatur $\vartheta_{Ref}$ dargestellt. Dabei zeigt Figur 3 in einer teilweisen Schnittdarstellung eine Ansicht von der Seite, Figur 4 eine Ansicht von oben und Figur 5 eine zweite Seitenansicht, bei der die Blickrichtung gegenüber der Blickrichtung der Figur 3 um 90° gedreht ist.

Auf der Oberfläche 303 eines Bauteils 306 ist ein Abstandshalter 309 angeordnet, welcher die zweite Sensoreinheit 327 trägt. Durch den Abstandshalter 309 ist sichergestellt, dass die zweite Sensoreinheit 327 beabstandet von der Oberfläche 303 angeordnet ist und keinen unmittelbaren thermischen Kontakt mit der Oberfläche 303 hat. Der Abstandshalter 309 besteht aus einem vergleichsweise schlecht wärmeleitenden Material (hoher Wärmewiderstand), so dass die Temperatur der zweiten Sensoreinheit 327 nur vernachlässigbar durch Wärmeleitung über den Abstandshalter 309 verfälscht wird. Vielmehr misst die zweite Sensoreinheit 327 die Referenztemperatur $\vartheta_{Ref}$, welche im Ausführungsbeispiel der oberflächennahen Temperatur entspricht. Wenn die Oberfläche 303 in Luft angeordnet ist, dann entspricht die Referenztemperatur $\vartheta_{Ref}$ der oberflächennahen Lufttemperatur. Die entlang der Oberfläche 303 strömende Luft 330 ist in den Figuren 3 - 5 symbolhaft durch Pfeile 330 dargestellt. Somit lassen sich insbesondere die Kühlungsbedingungen für das Bauteil ermitteln.

Der Abstandshalter 309 ist im Ausführungsbeispiel als ein Bügel ausgestaltet, welcher einen Durchgang zwischen der Oberfläche 303 und einem Steg des Abstandshalters 309 freilässt. Zwischen der Oberfläche 303 und dem Steg (also durch den genannten Durchgang) strömt die Luft 330. Der Abstandshalter 309 kann auch als ein Distanzbügel 309 bezeichnet werden, welcher einen Abstand/Distanz zwischen der zweiten Sensoreinheit 327 und der Oberfläche 303 sicherstellt. Im Ausführungsbeispiel besteht der Abstandshalter 309 aus einem streifenförmigen Material. Vorzugsweise handelt es sich um ein elektrisch isolierendes Material mit einer niedrigen Permittivität (niedrige dielektrische Leitfähigkeit). Das streifenförmige Material ist dabei vergleichsweise dünn, was zu der (gewünschten) relativ schlechten Wärmeleitfähigkeit des Abstandshalters beiträgt. Zwischen der Oberfläche 303 und der zweiten Sensoreinheit 327 befindet sich also ein Abstand, welcher insbesondere als eine Luftstrecke ausgeführt sein kann. Dieser Abstand/diese Luftstrecke führt zu einer thermischen und/oder elektrischen Entkopplung der Messung der Referenztemperatur mittels der zweiten Sensoreinheit 327 von dem Bauteil, an dessen Oberfläche der Abstandshalter 309 angeordnet ist. Dadurch wird eine Messung der Referenztemperatur (zum Beispiel der Lufttemperatur der die Oberfläche umgebenden Kühlluft) in unmittelbarer Nähe bzw. in einem definierten Abstand zu der Oberfläche 303 des Bauteils 306 ermöglicht. Die Messung der Referenztemperatur $\vartheta_{Ref}$ kann beispielsweise in der Nähe des kappenförmigen zweiten wärmeleitenden Bauelements 18 (vgl. Fig. 1), in der Nähe von Platinen mit wärmeerzeugenden Bauelementen oder in der Nähe einer metallischen Fläche des Bauteils erfolgen.

Ein Messung der Referenztemperatur mittels des die zweite Sensoreinheit tragenden Abstandshalters hat insbesondere den Vorteil, dass eine bessere Korrelation zwischen Vergleichsmessungen der Referenztemperatur im Prüffeld mit einer homogenen Lufttemperaturverteilung und Messungen im Feld mit (zum Beispiel bei hohen Turmaufbauten) stark inhomogener Kühllufttemperaturverteilung gegeben ist. Die bei der Prüffeldmessung ermittelten Werte entsprechen dann genauer den im realen Feld auftretenden Werten. Dadurch können insbesondere aussagekräftige Daten beispielsweise zur Verlustleistung in tatsächlicher Betriebsumgebung erlangt werden.

Im Ausführungsbeispiel ist der Wärmewiderstand des Abstandshalters 309 größer als der erste Wärmewiderstand des ersten wärmeleitenden Bauelements. Insbesondere kann der Wärmewiderstand des Abstandshalters 309 mindestens fünfmal größer sein als der erste Wärmewiderstand des ersten wärmeleitenden Bauelements. Dadurch wird sichergestellt, dass die Messung der Referenztemperatur mittels der zweiten Sensoreinheit 327 durch die Temperatur der Oberfläche 303 nur geringfügig verfälscht wird.

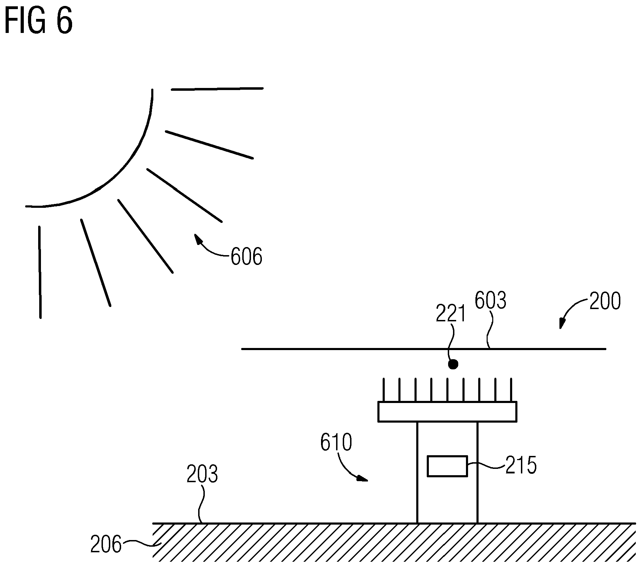

In Figur 6 ist ein Ausführungsbeispiel der Anordnung 200 zum Ermitteln der Temperatur der Oberfläche 203 des Bauteils 206 mit einem Abschirmelement 603 dargestellt. Dieses Abschirmelement dient zum Abschirmen von Wärmestrahlen, die nicht von dem Bauteil 206 stammen, sondern von einem weiteren Wärmestrahler 606. Derartige Wärmestrahlen werden auch als Fremd-Wärmestrahlen bezeichnet. Der weitere Wärmestrahler 606 ist im Ausführungsbeispiel der Figur 6 als die Sonne dargestellt. Ein solcher weiterer Wärmestrahler 606 kann aber beispielsweise auch durch heiße Oberflächen benachbarter Bauteile ausgebildet sein.

Das Abschirmelement 603 dient zum Abschirmen der ersten Sensoreinheit, des ersten wärmeleitenden Bauelements und/oder des zweiten wärmeleitenden Bauelements vor Wärmestrahlen des weiteren Wärmestrahlers 606. Das Abschirmelement 603 ist beabstandet von der ersten Sensoreinheit, dem ersten wärmeleitenden Bauelement und/oder dem zweiten wärmeleitenden Bauelement angeordnet. Das Abschirmelement 603 kann beispielsweise an der Oberfläche 203 des Bauteils 206 befestigt sein oder an einem anderen festen Punkt in der Umgebung des Bauteils. Bei dem Abschirmelement 603 kann es sich im einfachsten Fall um eine Platte (Abschirmplatte) handeln. Das Abschirmelement ist zwischen dem weiteren Wärmestrahler 606 und dem Wärmeteiler 610 mit der ersten Sensoreinheit 215 angeordnet. Das Abschirmelement 603 kann insbesondere die Funktion eines "Sonnendaches" aufweisen; das heißt, sie schützt vor Wärmestrahlung, welche die Ermittlung der Temperatur der Oberfläche 203 verfälschen würde.

Das Abschirmelement 603 kann vorteilhafterweise an der Seite des Wärmeteilers angeordnet sein, von der die störende Fremd-Wärmestrahlung einwirkt. Es ergibt sich dadurch eine Entkopplung der Ermittlung der Temperatur der Oberfläche 203 von verfälschenden Wärmeeinträgen von außen. Das Abschirmelement 603 (beispielsweise die Abschirmplatte) kann optional strahlungsreflektierend und/oder in weißer Farbe ausgeführt sein. Das Abschirmelement 603 kann insbesondere aus einem dünnen nichtmetallischen Material gefertigt sein, welches eine niedrige Permittivität (niedrige dielektrische Leitfähigkeit) aufweist. Daher wird die Drahtlosübertragung von Daten der ersten Sensoreinheit nur wenig durch das Abschirmelement 603 beeinträchtigt.

Mittels des ersten Temperatursensors wird also eine erste Temperatur $\vartheta_{sens}$ gemessen, die sich am Ort der ersten Sensoreinheit eingestellt hat. Diese erste Temperatur $\vartheta_{sens}$ liegt im stationären Zustand zwischen der Temperatur der Oberfläche $\vartheta_0$ und der Temperatur des Referenzpunktes $\vartheta_{Ref}$. Die Temperatur des Referenzpunktes $\vartheta_{Ref}$ ist bekannt oder wird mittels des zweiten Temperatursensors der zweiten Sensoreinheit gemessen. Aus der gemessenen ersten Temperatur $\vartheta_{sens}$ und der gemessenen Temperatur des Referenzpunktes $\vartheta_{Ref}$ kann dann die Temperatur der Oberfläche $\vartheta_0$ ermittelt werden. Diese Ermittlung der Temperatur $\vartheta_0$ der Oberfläche kann mittels vorbekannter thermischer Eigenschaften des ersten wärmeleitenden Bauelements und des zweiten wärmeleitenden Bauelements erfolgen. Bei diesen vorbekannten thermischen Eigenschaften kann es sich beispielsweise jeweils um den vorbekannten Wärmewiderstand des ersten wärmeleitenden Bauelements und des zweiten wärmeleitenden Bauelements handeln. Mittels dieser Wärmewiderstände kann die Temperatur der Oberfläche berechnet werden, wie im Folgenden beschrieben ist.

In Figur 7 ist ein modellhaftes thermisches Ersatzschaltbild für den Wärmeteiler dargestellt. Dabei ist $R_{W1}$ der Wärmewiderstand des ersten wärmeleitenden Bauelements, $R_{W2}$ der Wärmewiderstand des zweiten wärmeleitenden Bauelements, $C_{W1}$ die Wärmekapazität des ersten wärmeleitenden Bauelements und $C_{W2}$ die Wärmekapazität des zweiten wärmeleitenden Bauelements. Im stationären Zustand können die Wärmekapazitäten $C_{W1}$ und $C_{W2}$ vernachlässigt werden. Für dieses Modell gilt im stationären Zustand näherungsweise die folgende Beziehung:

$$(\vartheta_0 - \vartheta_{Ref}) = (\vartheta_{sens} - \vartheta_{Ref}) \frac{R_{W1} + R_{W2}}{R_{W2}}$$

Daraus kann die Temperatur $\vartheta_0$ der Oberfläche ermittelt werden.

Für die Ermittlung der Temperatur der Oberfläche braucht aber der Wärmewiderstand $R_{w1}$ des ersten wärmeleitenden Bauelements und der Wärmewiderstand $R_{w2}$ des zweiten wärmeleitenden Bauelements nicht explizit bekannt zu sein. Vielmehr ist es auch möglich, dass für eine gleichartige Anordnung im Labor messtechnisch die Abhängigkeit der Temperatur $\vartheta_0$ der Oberfläche von der gemessenen ersten Temperatur $\vartheta_{sens}$ bei verschiedenen Temperaturen $\vartheta_{Ref}$ des Referenzpunktes ermittelt worden ist. Diese vorbekannte Abhängigkeit kann beispielsweise in Form von zusammengehörenden Werten in einer Tabelle gespeichert sein (look-up table). Dann kann aus dieser Tabelle (ohne die Notwendigkeit von arithmetischen Berechnungen) der jeweilige Wert der Temperatur der Oberfläche ermittelt werden, welcher zu der gemessenen ersten Temperatur gehört.

In Figur 8 ist schematisch ein Ausführungsbeispiel der ersten Sensoreinheit 15 bzw. 215 dargestellt. Die zweite Sensoreinheit 227, 327 kann gleichartig aufgebaut sein. Die erste Sensoreinheit 15 weist den ersten Temperatursensor 803, den elektrischen Energiespeicher 806 und die drahtlose Datenübertragungseinheit 809 auf.

Es wurde eine Anordnung und ein Verfahren zum Ermitteln der Temperatur einer Oberfläche beschrieben. Dabei weist der Wärmeteiler das erste wärmeleitende Bauelement und das zweite wärmeleitende Bauelement auf. Mittels des Wärmeteilers kann auch eine derart hohe Temperatur einer Oberfläche ermittelt werden, welche die erste Sensoreinheit beschädigen würden, wenn sie unmittelbar auf die erste Sensoreinheit einwirken würde. Mittels des Wärmeteilers wird also der Messbereich der Anordnung gegenüber dem Messbereich der ersten Sensoreinheit deutlich vergrößert.

Es wurde der Einsatz eines Wärmeteilers beschrieben, um die Temperatur der ersten Sensoreinheit zu begrenzen. Der Wärmeteiler ermöglicht die Messung von hohen Temperaturen der Oberfläche, die oberhalb des zulässigen Messbereichs der ersten Sensoreinheit liegen. Dazu wird die erste Sensoreinheit innerhalb des Wärmeteilers installiert. Die Temperatur der ersten Sensoreinheit wird durch den Wärmeteiler begrenzt. Dies erfolgt insbesondere durch Wärmeflussbegrenzung: es erfolgt auf der einen Seite der ersten Sensoreinheit eine wärmebegrenzende Anbindung der Sensoreinheit an die Oberfläche und auf der anderen Seite der Sensoreinheit eine wärmebegrenzende Anbindung der Sensoreinheit an die Temperatur des Referenzpunktes (z.B. an die kühle Umgebungsluft). Die aktuelle Temperatur der Umgebungsluft (also die Temperatur des Referenzpunktes) kann dabei mit einem getrennten Sensor/Sensoreinheit gemessen werden.

Das zweite wärmeleitende Bauelement des Wärmeteilers kann dabei ein Bauelement zur Temperaturabschirmung (z.B. eine Kappe bzw. Oberkappe) sein. Diese Kappe bedingt einen reduzierten Wärmeübergang zum Referenzpunkt (also beispielsweise zur Umgebungsluft). Das erste wärmeleitende Bauelement kann beispielsweise als eine wärmeflussbegrenzende Scheibe (die auch als Unterscheibe bezeichnet werden kann) ausgebildet sein. Durch diese Scheibe wird nicht die volle Wärme der zu messenden Oberfläche an die erste Sensoreinheit weitergeleitet. Vielmehr erfolgt ein balancierter Wärmefluss durch die Scheibe, durch die erste Sensoreinheit und durch die Kappe. Mittels einer Umrechnungsfunktion kann aus der von der ersten Sensoreinheit gemessenen ersten Temperatur und der bekannten Temperatur des Referenzpunktes die Temperatur der Oberfläche ermittelt werden.

Insbesondere kann der Wärmeteiler vor dem Einsatz kalibriert werden. Dazu kann beispielsweise bei Laborbedingungen das Bauteil mit der Oberfläche mit der zu messenden Temperatur und mit dem an der Oberfläche angeordneten Wärmeteiler erwärmt werden. Dabei wird die Temperatur der Oberfläche mittels einer direkten Messung ermittelt und gemeinsam mit der von der ersten Sensoreinheit 215 gemessenen Temperatur und der Referenztemperatur des Referenzpunktes in einer Messreihe abgelegt und abgespeichert. Als Referenztemperatur kann dabei insbesondere die Temperatur der Kühlrippen des zweiten wärmeleitende Bauelements 218 verwendet werden. Diese Messreihen können für verschiedenen Referenztemperaturen (Umgebungstemperaturen) ermittelt und abgespeichert werden. Aus diesen Messreihen kann dann eine Übertragungsfunktion (Umrechnungsfunktion) für den Wärmeteiler ermittelt werden. Diese Messreihen bilden dann eine Tabelle, in der zusammengehörende Werte abgespeichert sind, welche die vorbekannte Abhängigkeit der einzelnen Temperaturen des Wärmeteilers beschreiben. Alternativ kann die Temperatur der Oberfläche aber auch rechnerisch ermittelt werden, wie im Zusammenhang mit Figur 7 beschrieben ist. Insbesondere kann zur Erzielung einer hohen Genauigkeit die Abbildung der Temperatur als Werteschar für die jeweilige Referenztemperatur abgespeichert werden und später bei der konkreten Messung berücksichtigt / referenziert werden.

Es wurden eine Anordnung und ein Verfahren zum Ermitteln der Temperatur einer Oberfläche beschrieben, bei denen eine erste Sensoreinheit mit einem ersten Temperatursensor in einem Wärmeteiler integriert sind. Dadurch wird die Messung von Oberflächentemperaturen mittels des ersten Temperatursensors der ersten Sensoreinheit auch dann ermöglicht, wenn die Temperatur der Oberfläche außerhalb des Messbereichs der ersten Sensoreinheit liegt. Dadurch können preiswerte Sensoreinheiten verwendet werden, welche nur einen eingeschränkten Temperaturbereich aufweisen. Sondertechnik für höhere Temperaturen und/oder teure Materialien werden vorteilhafterweise nicht benötigt.

**Patentansprüche**

1.   Anordnung (1) zum Ermitteln der Temperatur ($\vartheta_o$) einer Oberfläche (3), mit

- einer ersten Sensoreinheit (15), die einen ersten Temperatursensor (803) aufweist,
- einem ersten wärmeleitenden Bauelement (12), das dazu ausgestaltet ist, die erste Sensoreinheit (15) mit der Oberfläche (3) zu verbinden, und
- einem zweiten wärmeleitenden Bauelement (18), das dazu ausgestaltet ist, die erste Sensoreinheit (15) mit einem von der Oberfläche (3) beabstandeten Referenzpunkt (21) zu verbinden, **dadurch gekennzeichnet, dass**
- das erste wärmeleitende Bauelement (12) und das zweite wärmeleitende Bauelement (18) so ausgestaltet sind, dass die sich stationär einstellende Temperatur der ersten Sensoreinheit (15) in Grad Celsius zwischen 20% und 70% der Temperatur der Oberfläche (3), insbesondere zwischen 20% und 40% der Temperatur der Oberfläche (3), beträgt, wenn die Temperatur der Oberfläche größer ist als die Temperatur des Referenzpunktes.

2.   Anordnung nach Anspruch 1,
      **dadurch gekennzeichnet, dass**

- das erste wärmeleitende Bauelement (12) und das zweite wärmeleitende Bauelement (18) einen Wärmeteiler bilden, wobei das erste wärmeleitende Bauelement (12) einen ersten Wärmewiderstand aufweist und das zweite wärmeleitende Bauelement (18) einen zweiten Wärmewiderstand aufweist.

**3.** Anordnung nach einem der vorhergehenden Ansprüche,
**dadurch gekennzeichnet, dass**

- das erste wärmeleitende Bauelement (12) an einer Seite der erste Sensoreinheit (15) angeordnet ist und das zweite wärmeleitende Bauelement (18) an der gegenüberliegenden Seite der ersten Sensoreinheit (15) angeordnet ist.

**4.** Anordnung nach einem der vorhergehenden Ansprüche,
**dadurch gekennzeichnet, dass**

- das erste wärmeleitende Bauelement (12) an einer der Oberfläche (3) zugewandten Seite der ersten Sensoreinheit (15) angeordnet ist und das zweite wärmeleitende Bauelement (18) an einer der Oberfläche (3) abgewandten Seite der ersten Sensoreinheit (15) angeordnet ist.

**5.** Anordnung nach einem der vorhergehenden Ansprüche,
**dadurch gekennzeichnet, dass**

- das erste wärmeleitende Bauelement (212) und/oder das zweite wärmeleitende Bauelement (218) jeweils eine T-förmige Querschnittsfläche aufweisen.

**6.** Anordnung nach einem der vorhergehenden Ansprüche,
**dadurch gekennzeichnet, dass**

- das erste wärmeleitende Bauelement (212) und/oder das zweite wärmeleitende Bauelement (218) jeweils eine Doppel-T-förmige Querschnittsfläche aufweisen.

**7.** Anordnung nach einem der Ansprüche 1 bis 4,
**dadurch gekennzeichnet, dass**

- das erste wärmeleitende Bauelement eine Scheibe (12) ist und/oder das zweite wärmeleitende Bauelement eine Kappe (18) ist.

**8.** Anordnung nach einem der vorhergehenden Ansprüche,
**dadurch gekennzeichnet, dass**

- das zweite wärmeleitende Bauelement (218) Kühlrippen (224) aufweist.

**9.** Anordnung nach einem der vorhergehenden Ansprüche,
**dadurch gekennzeichnet, dass**

- die erste Sensoreinheit (215), das erste wärmeleitende Bauelement (212) und/oder das zweite wärmeleitende Bauelement (218) gegenüber einem sie umgebenden Fluid, insbesondere gegenüber der sie umgebenden Luft, thermisch isoliert (230) sind.

**10.** Anordnung nach einem der vorhergehenden Ansprüche,
**gekennzeichnet durch**

- ein Abschirmelement (603) zum Abschirmen von Wärmestrahlen, das beabstandet von der ersten Sensoreinheit (215), dem ersten wärmeleitenden Bauelement (212) und/oder dem zweiten wärmeleitenden Bauelement (218) angeordnet ist.

**11.** Anordnung nach einem der vorhergehenden Ansprüche,
**gekennzeichnet durch**

- eine zweite Sensoreinheit (227) zum Ermitteln der Temperatur des Referenzpunktes (221), wobei die zweite Sensoreinheit (227) einen zweiten Temperatursensor aufweist, und die zweite Sensoreinheit (227) an einer der ersten Sensoreinheit (215) abgewandten Seite des zweiten wärmeleitenden Bauelements (218) angeordnet ist.

**12.** Anordnung nach einem der Ansprüche 1 bis 10,
**gekennzeichnet durch**

- eine zweite Sensoreinheit (327) zum Ermitteln der Temperatur des Referenzpunktes, wobei die zweite Sensoreinheit (327) mittels eines Abstandshalters (309) an der Oberfläche (303) befestigbar ist.

**13.** Anordnung nach einem der Ansprüche 2 bis 10,
**dadurch gekennzeichnet, dass**

- die Anordnung eine zweite Sensoreinheit (327) zum Ermitteln der Temperatur des Referenzpunktes aufweist, wobei die zweite Sensoreinheit (327) mittels eines Abstandshalters (309) an der Oberfläche (303) befestigbar ist, und
- der Wärmewiderstand des Abstandshalters (309) größer ist, insbesondere mindestens 5 Mal größer ist, als der erste Wärmewiderstand.

**14.** Anordnung nach einem der vorhergehenden Ansprüche,
**dadurch gekennzeichnet, dass**

- die Oberfläche die Oberfläche eines Bauteils (6, 206), insbesondere die Oberfläche eines Bauteils einer Hochspannungsanlage, ist.

**15.** Anordnung nach einem der vorhergehenden Ansprüche,
**dadurch gekennzeichnet, dass**

- die erste Sensoreinheit (15, 215) einen elektrischen Energiespeicher (806) und/oder eine drahtlose Datenübertragungseinheit (809) aufweist.

**16.** Verfahren zum Ermitteln der Temperatur einer Oberfläche (3) mittels einer ersten Sensoreinheit (15), die einen ersten Temperatursensor (803) aufweist, einem ersten wärmeleitenden Bauelement (12), das die erste Sensoreinheit (15) mit der Oberfläche (3) verbindet, und einem zweiten wärmeleitenden Bauelement (18), das die erste Sensoreinheit (15) mit einem von der Oberfläche (3) beabstandeten Referenzpunkt (21) verbindet, wobei das erste wärmeleitende Bauelement (12) und das zweite wärmeleitende Bauelement (18) so ausgestaltet sind, dass die sich stationär einstellende Temperatur der ersten Sensoreinheit (15) in Grad Celsius zwischen 20% und 70% der Temperatur der Oberfläche (3), insbesondere zwischen 20% und 40% der Temperatur der Oberfläche (3), beträgt, wenn die Temperatur der Oberfläche größer ist als die Temperatur des Referenzpunktes, wobei bei dem Verfahren

- mittels des ersten Temperatursensors (803) eine erste Temperatur ($\vartheta_{sens}$) gemessen wird, die sich am Ort des ersten Temperatursensors einstellt, wobei die erste Temperatur ($\vartheta_{sens}$) zwischen der Temperatur ($\vartheta_{o}$) der Oberfläche (3) und der Temperatur ($\vartheta_{Ref}$) des Referenzpunktes (21) liegt, und
- aus der gemessenen ersten Temperatur ($\vartheta_{sens}$) und der Temperatur ($\vartheta_{Ref}$) des Referenzpunktes (21) die Temperatur ($\vartheta_{o}$) der Oberfläche ermittelt wird.

**17.** Verfahren nach Anspruch 16,
**dadurch gekennzeichnet, dass**

- aus der gemessenen ersten Temperatur ($\vartheta_{sens}$) und der Temperatur ($\vartheta_{Ref}$) des Referenzpunktes (21) die Temperatur ($\vartheta_{o}$) der Oberfläche ermittelt wird mittels vorbekannter thermischer Eigenschaften des ersten wärmeleitenden Bauelements (12) und des zweiten wärmeleitenden Bauelements (18) .

**18.** Verfahren nach Anspruch 16 oder 17,
**dadurch gekennzeichnet, dass**

- aus der gemessenen ersten Temperatur ($\vartheta_{sens}$) und der Temperatur ($\vartheta_{Ref}$) des Referenzpunktes (21) die Temperatur ($\vartheta_{o}$) der Oberfläche (3) ermittelt wird mittels einer vorbekannten Abhängigkeit der Temperatur ($\vartheta_{o}$) der Oberfläche (3) von der gemessenen ersten Temperatur ($\vartheta_{sens}$) bei der jeweiligen Temperatur ($\vartheta_{Ref}$) des Referenzpunktes (21).

**19.** Verfahren nach Anspruch 18,

**dadurch gekennzeichnet, dass**

- die vorbekannte Abhängigkeit als zusammengehörende Werte in einer Tabelle gespeichert sind.

**20.** Verfahren nach einem der Ansprüche 16 bis 19,
**dadurch gekennzeichnet, dass**

- mittels eines zweiten Temperatursensors die Temperatur ($\vartheta_{Ref}$) des Referenzpunktes gemessen wird.

**Claims**

**1.** Assembly (1) for determining the temperature ($\vartheta_o$) of a surface (3), having

- a first sensor unit (15) that has a first temperature sensor (803),
- a first thermally conductive element (12) that is configured to connect the first sensor unit (15) to the surface (3), and
- a second thermally conductive element (18) that is configured to connect the first sensor unit (15) to a reference point (21) spaced from the surface (3), **characterized in that**
- the first thermally conductive element (12) and the second thermally conductive element (18) are configured such that the steady-state temperature of the first sensor unit (15) in degrees Celsius is between 20% and 70% of the temperature of the surface (3), in particular between 20% and 40% of the temperature of the surface (3), when the temperature of the surface is higher than the temperature of the reference point.

**2.** Assembly according to Claim 1,
**characterized in that**

- the first thermally conductive element (12) and the second thermally conductive element (18) form a heat divider, wherein the first thermally conductive element (12) has a first thermal resistance and the second thermally conductive element (18) has a second thermal resistance.

**3.** Assembly according to either of the preceding claims,
**characterized in that**

- the first thermally conductive element (12) is arranged on one side of the first sensor unit (15) and the second thermally conductive element (18) is arranged on the opposite side of the first sensor unit (15).

**4.** Assembly according to one of the preceding claims,
**characterized in that**

- the first thermally conductive element (12) is arranged on a side of the first sensor unit (15) facing the surface (3), and the second thermally conductive element (18) is arranged on a side of the first sensor unit (15) facing away from the surface (3).

**5.** Assembly according to one of the preceding claims,
**characterized in that**

- the first thermally conductive element (212) and/or the second thermally conductive element (218) each have a T-shaped cross-sectional surface.

**6.** Assembly according to one of the preceding claims,
**characterized in that**

- the first thermally conductive element (212) and/or the second thermally conductive element (218) each have a double T-shaped cross-sectional surface.

**7.** Assembly according to one of Claims 1 to 4,
**characterized in that**

- the first thermally conductive element is a disk (12) and/or the second thermally conductive element is a cap (18).

8. Assembly according to one of the preceding claims,
   **characterized in that**

   - the second thermally conductive element (218) has cooling fins (224).

9. Assembly according to one of the preceding claims,
   **characterized in that**

   - the first sensor unit (215), the first thermally conductive element (212) and/or the second thermally conductive element (218) are thermally insulated (230) from a fluid surrounding them, in particular from the air surrounding them.

10. Assembly according to one of the preceding claims,
    **characterized by**

    - a shielding element (603) to provide shielding from thermal radiation, which shielding element is spaced from the first sensor unit (215), the first thermally conductive element (212) and/or the second thermally conductive element (218) .

11. Assembly according to one of the preceding claims,
    **characterized by**

    - a second sensor unit (227) for determining the temperature of the reference point (221), wherein the second sensor unit (227) has a second temperature sensor, and the second sensor unit (227) is arranged on a side of the second thermally conductive element (218) facing away from the first sensor unit (215).

12. Assembly according to one of Claims 1 to 10,
    **characterized by**

    - a second sensor unit (327) for determining the temperature of the reference point, wherein the second sensor unit (327) can be fastened to the surface (303) by means of a spacer (309).

13. Assembly according to one of Claims 2 to 10,
    **characterized in that**

    - the arrangement has a second sensor unit (327) for determining the temperature of the reference point, wherein the second sensor unit (327) can be fastened to the surface (303) by means of a spacer (309), and
    - the thermal resistance of the spacer (309) is greater, in particular at least 5 times greater, than the first thermal resistance.

14. Assembly according to one of the preceding claims,
    **characterized in that**

    - the surface is the surface of a component (6, 206), in particular the surface of a component of a high-voltage installation.

15. Assembly according to one of the preceding claims,
    **characterized in that**

    - the first sensor unit (15, 215) has an electrical energy storage means (806) and/or a wireless data transmission unit (809) .

16. Method for determining the temperature of a surface (3) by means of a first sensor unit (15) that has a first temperature sensor (803), a first thermally conductive element (12) that connects the first sensor unit (15) to the surface (3), and a second thermally conductive element (18) that connects the first sensor unit (15) to a reference point (21) spaced from the surface (3), wherein the first thermally conductive element (12) and the second thermally conductive element (18) are configured such that the steady-state temperature of the first sensor unit (15) in degrees Celsius is between 20% and 70% of the temperature of the surface (3), in particular between 20% and 40% of the temperature of the surface (3), when the temperature of the surface is higher than the temperature of the reference point, wherein the method involves

- the first temperature sensor (803) being used to measure a first temperature ($\vartheta_{sens}$) that arises at the location of the first temperature sensor, wherein the first temperature ($\vartheta_{sens}$) is between the temperature ($\vartheta_o$) of the surface (3) and the temperature ($\vartheta_{Ref}$) of the reference point (21), and
- the temperature ($\vartheta_o$) of the surface being determined from the measured first temperature ($\vartheta_{sens}$) and the temperature ($\vartheta_{Ref}$) of the reference point (21).

**17.** Method according to Claim 16,
**characterized in that**

- the temperature ($\vartheta_o$) of the surface is determined from the measured first temperature ($\vartheta_{sens}$) and the temperature ($\vartheta_{Ref}$) of the reference point (21) by means of previously known thermal properties of the first thermally conductive element (12) and of the second thermally conductive element (18).

**18.** Method according to Claim 16 or 17,
**characterized in that**

- the temperature ($\vartheta_o$) of the surface (3) is determined from the measured first temperature ($\vartheta_{sens}$) and the temperature ($\vartheta_{Ref}$) of the reference point (21) by means of a previously known dependency of the temperature ($\vartheta_o$) of the surface (3) on the measured first temperature ($\vartheta_{sens}$) at the respective temperature ($\vartheta_{Ref}$) of the reference point (21).

**19.** Method according to Claim 18,
**characterized in that**

- the previously known dependency is saved as related values in a table.

**20.** Method according to one of Claims 16 to 19,
**characterized in that**

- the temperature ($\vartheta_{Ref}$) of the reference point is measured by means of a second temperature sensor.


**Revendications**

**1.** Système (1) de détermination de la température ($\vartheta_o$) d'une surface (3), comprenant

- une première unité (15) de sonde, qui a une première sonde (803) de température,
- un premier composant (12) conducteur de la chaleur, qui est conformé pour relier la première unité (15) de sonde à la surface (3), et
- un deuxième composant (18) conducteur de la chaleur, qui est conformé pour relier la première unité (15) de sonde à un point (21) de référence à distance de la surface (3),
**caractérisé en ce que**
- le premier composant (12) conducteur de la chaleur et le deuxième composant (18) conducteur de la chaleur sont conformés de manière à ce que la température, s'établissant de manière stationnaire, de la première unité (15) de sonde représente en degré Celsius entre 20% et 70% de la température de la surface (3), notamment entre 20% et 40% de la température de la surface (3), si la température de la surface est plus haute que la température du point de référence.

**2.** Système suivant la revendication 1,
**caractérisé en ce que**

- le premier composant (12) conducteur de la chaleur et le deuxième composant (18) conducteur de la chaleur forment un diviseur de chaleur, dans lequel le premier composant (12) conducteur de la chaleur a une première résistance thermique et le deuxième composant (18) conducteur de la chaleur a une deuxième résistance thermique.

3.  Système suivant l'une des revendications précédentes,
    **caractérisé en ce que**

    - le premier composant (12) conducteur de la chaleur est disposé d'un côté de la première unité (15) de sonde et le deuxième composant (18) conducteur de la chaleur est disposé du côté opposé de la première unité (15) de sonde.

4.  Système suivant l'une des revendications précédentes,
    **caractérisé en ce que**

    - le premier composant (12) conducteur de la chaleur est disposé d'un côté, tourné vers la surface (3), de la première unité (15) de sonde et le deuxième composant (18) conducteur de la chaleur est disposé d'un côté, non tourné vers la surface (3), de la première unité (15) de sonde.

5.  Système suivant l'une des revendications précédentes,
    **caractérisé en ce que**

    - le premier composant (212) conducteur de la chaleur et/ou le deuxième composant (218) conducteur de la chaleur ont respectivement une surface de section transversale en forme de T.

6.  Système suivant l'une des revendications précédentes,
    **caractérisé en ce que**

    - le premier composant (212) conducteur de la chaleur et/ou le deuxième composant (218) conducteur de la chaleur ont chacun une surface de section transversale en forme de double T.

7.  Système suivant l'une des revendications 1 à 4,
    **caractérisé en ce que**

    - le premier composant conducteur de la chaleur est un disque (12) et/ou le deuxième composant conducteur de la chaleur est une coiffe (18).

8.  Système suivant l'une des revendications précédentes,
    **caractérisé en ce que**

    - le deuxième composant (218) conducteur de la chaleur a des ailettes (224) de refroidissement.

9.  Système suivant l'une des revendications précédentes,
    **caractérisé en ce que**

    - la première unité (215) de sonde, le premier composant (212) conducteur de la chaleur et/ou le deuxième composant (218) conducteur de la chaleur sont isolés (230) thermiquement vis-à-vis d'un fluide, qui les entoure, notamment vis-à-vis de l'air, qui les entoure.

10. Système suivant l'une des revendications précédentes,
    **caractérisé par**

    - un élément (603) d'écran pour faire écran à du rayonnement calorifique, qui est disposé à distance de première unité (215) de sonde, du premier composant (212) conducteur de la chaleur et/ou du deuxième composant (218) conducteur de la chaleur.

11. Système suivant l'une des revendications précédentes,
    **caractérisé par**

    - une deuxième unité (227) de sonde de détermination de la température du point (221) de référence, dans lequel la deuxième unité (227) de sonde a une deuxième sonde de température et la deuxième unité (227) de sonde est disposée d'un côté, non tourné vers la première unité (215) de sonde, du deuxième composant (218) conducteur de la chaleur.

**12.** Système suivant l'une des revendications 1 à 10,
**caractérisé par**

- une deuxième unité (327) de sonde de détermination de la température du point de référence, dans lequel la deuxième unité (327) de sonde peut être fixée à la surface (303) au moyen d'une entretoise (309).

**13.** Système suivant l'une des revendications 2 à 10,
**caractérisé en ce que**

- le système a une deuxième unité (327) de sonde de détermination de la température du point de référence, dans lequel la deuxième unité (327) de sonde peut être fixée à la surface (303) au moyen d'une entretoise (309), et
- la résistance thermique de l'entretoise (309) est plus grande, notamment au moins 5 fois plus grande, que celle de la première résistance thermique.

**14.** Système suivant l'une des revendications précédentes,
**caractérisé en ce que**

- la surface est la surface d'un composant (6, 206), notamment la surface d'un composant d'une installation de haute tension.

**15.** Système suivant l'une des revendications précédentes,
**caractérisé en ce que**

- la première unité (15, 215) de sonde a un accumulateur (806) d'énergie électrique et/ou une unité (809) de transmission sans fil de données.

**16.** Procédé de détermination de la température d'une surface (3) au moyen d'une première unité (15) de sonde, qui a une première sonde (803) de température, un premier composant (12) conducteur de la chaleur, qui est conformé pour relier la première unité (15) de sonde à la surface (3), et un deuxième composant (18) conducteur de la chaleur, qui est conformé pour relier la première unité (15) de sonde à un point (21) de référence à distance de la surface (3), dans lequel le premier composant (12) conducteur de la chaleur et le deuxième composant (18) conducteur de la chaleur sont conformés de manière à ce que la température, s'établissant de manière stationnaire, de la première unité (15) de sonde, représente en degré Celsius entre 20% et 70% de la température de la surface (3), notamment entre 20% et 40% de la température de la surface (3), si la température de la surface est plus haute que la température du point de référence, dans lequel, dans le procédé

- on mesure, au moyen de la première sonde (803) de température, une première température ($\vartheta_{sens}$), qui s'établit à l'emplacement de la première sonde de température, dans lequel la première température ($\vartheta_{sens}$) est comprise entre la température ($\vartheta_0$) de la surface (3) et la température ($\vartheta_{Ref}$) du point (21) de référence, et
- on détermine la température ($\vartheta_0$) de la surface à partir de la première température ($\vartheta_{sens}$) mesurée et de la température ($\vartheta_{Ref}$) du point (21) de référence.

**17.** Procédé suivant la revendication 16,
**caractérisé en ce qu'**

- on détermine la température ($\vartheta_0$) de la surface à partir de la première température ($\vartheta_{sens}$) mesurée et de la température ($\vartheta_{Ref}$) du point (21) de référence, au moyen de propriétés thermiques connues à l'avance du premier composant (12) conducteur de la chaleur et du deuxième composant (18) conducteur de la chaleur.

**18.** Procédé suivant la revendication 16 ou 17,
**caractérisé en ce qu'**

- on détermine la température ($\vartheta_0$) de la surface (3) à partir de la première température ($\vartheta_{sens}$) mesurée et de la température ($\vartheta_{Ref}$) du point (21) de référence, au moyen d'une variation connue à l'avance de la température

($\vartheta_0$) de la surface (3) en fonction de la première température ($\vartheta_{sens}$) mesurée à la température ($\vartheta_{Ref}$) respective du point (21) de référence.

**19.** Procédé suivant la revendication 18,
**caractérisé en ce qu'**

- on met la variation connue à l'avance comme valeurs allant ensemble dans un tableau.

**20.** Procédé suivant l'une des revendications 16 à 19,
**caractérisé en ce qu'**

- on mesure la température ($\vartheta_{Ref}$) respective du point de référence au moyen de la deuxième sonde de température.

FIG 1

FIG 2

# FIG 3

# FIG 4

# FIG 5

FIG 6

FIG 7

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2266771 A
- EP 2329240 A1

- DE 19917372 A1